# EUROPEAN PATENT SPECIFICATION

(11) **EP 4 030 539 B1**
(45) Date of publication and mention of the grant of the patent: **23.10.2024**
(21) Application number: 22151348.4
(22) Date of filing: 13.01.2022
(51) Int. Cl.: H01M 50/153, H01M 50/148, H01M 50/164, H01M 50/181, H01M 50/191, H01M 50/545, H01M 50/559, H01M 50/562, H01M 50/188

(54) **RECHARGEABLE BATTERY**
WIEDERAUFLADBARE BATTERIE
BATTERIE RECHARGEABLE

(30) Priority: 19.01.2021 KR 20210007544
(43) Date of publication of application: 20.07.2022
(73) Proprietor: Samsung SDI Co., Ltd., Yongin-si, Gyeonggi-do 17084 (KR)
(72) Inventor: Chun, Byoungmin, 17084 Yongin-si, Gyeonggi-do (KR); Lee, Jong-Ha, 17084 Yongin-si, Gyeonggi-do (KR)
(74) Representative: Gulde & Partner

(56) References cited:
- EP-A1- 3 930 087
- CN-A- 107 359 290
- CN-U- 210 379 128
- US-A1- 2001 012 582
- US-A1- 2014 106 210
- US-A1- 2021 328 290

## Description

### BACKGROUND

### 1. Field

Aspects of embodiments of the present disclosure relate to a rechargeable battery.

### 2. Description of the Related Art

In general, a rechargeable battery is a battery that is designed to be charged and discharged.

Recently, as the demand for wearable devices, such as headphones, earphones, smartwatches, and body-attached medical devices using wireless communication, such as Bluetooth, increases, the demand for an ultra-small rechargeable battery mounted on (or in) the wearable device is increasing.

Such an ultra-small rechargeable battery includes a case accommodating an electrode assembly including both electrodes, the case being connected to one electrode of the electrode assembly, and a terminal portion connected with the other electrode of the electrode assembly while sealing the case and the electrode assembly.

However, a conventional ultra-small rechargeable battery uses a polymer material to close and seal and insulate between the terminal portion and the case, and thus, it is vulnerable to high temperature and high humidity environments.

The above information disclosed in this Background section is for enhancement of understanding of the background of the present disclosure, and therefore, it may contain information that does not form the prior art that is already known to a person of ordinary skill in the art.
US20010012582 A1 and EP3930087A1 a rechargeable battery including a plating layer bonded to an insulation layer. CN107359290 A discloses an insulating layer of ceramic material.

### SUMMARY

An embodiment of the present disclosure provides a rechargeable battery that is strong (e.g., resilient or durable) in a high temperature and high humidity environment.

According to an embodiment of the present disclosure, a rechargeable battery is provided as defined in claim 1..

The terminal portion may include: a first terminal portion including a flange portion covering the opening in the cap plate and being on the cap plate and a protruding portion that extends from the flange portion into the opening in the cap plate; and a plating layer coated on a surface of the first terminal portion.

The plating layer may close and seal between the first terminal portion and the cap plate.

The terminal portion may include: a second terminal portion in the opening in the cap plate; and a plating layer coated on a surface of the second terminal portion.

The plating layer may close and seal between the second terminal portion and the cap plate.

The plating layer may include: a first plating portion filling the opening in the cap plate; a second plating portion extend from the first plating portion and covering an upper surface of the cap plate; and a third plating portion extending from the first plating portion and covering a lower surface of the cap plate.

The insulation layer may include: a first coating layer coated on a side surface of the cap plate that forms the opening in the cap plate; a second coating layer coated on an upper surface of the cap plate around the opening in the cap plate; and a third coating layer coated on a lower surface of the cap plate around the opening in the cap plate.

The first coating layer, the second coating layer, and the third coating layer may be integrally formed.

The second coating layer may be coated on only a part of the upper surface of the cap plate, and the third coating layer may be coated on only a part of the lower surface of the cap plate. The first coating layer may be completely covered by the plating layer, whereas the second coating layer and/or the third coating layer may not covered by the plating layer. Alternatively, the first coating layer may be completely covered by the plating layer, whereas the second coating layer and/or the third coating layer may be partly covered by the plating layer.

The terminal portion may include a plating layer that directly contacts the first coating layer, the second coating layer, and the third coating layer.

The first coating layer may be completely covered by the plating layer, and a part of the second coating layer and a part of the third coating layer may not contact the plating layer.

The insulation layer may include a ceramic material.

The electrode assembly may further include: a first electrode tab extended from the first electrode and welded to the case; and a second electrode tab extended from the second electrode and welded to the terminal portion.

The case and the cap plate may have the same polarity as the first electrode, and the terminal portion may have the same polarity as the second electrode.

The rechargeable battery may be a coin cell or a button cell.

A ratio of a height to a diameter of the coin cell or the button cell may be 1 or less.

According to embodiments of the present disclosure, a rechargeable battery that is strong to (e.g., durable or resilient in a) high temperature and high humidity environments is provided.

### BRIEF DESCRIPTION OF THE DRAWINGS

FIG. 1 is a perspective view of a rechargeable battery according to an embodiment.
FIG. 2 is a cross-sectional view taken along the line II-II in FIG. 1.
FIG. 3 is an enlarged view of the portion A of FIG. 2.
FIG. 4 is a cross-sectional view of a rechargeable battery according to another embodiment.
FIG. 5 is an enlarged view of the portion B of FIG. 4.
FIG. 6 is a cross-sectional view of a rechargeable battery according to another embodiment.
FIG. 7 is an enlarged view of the portion C of FIG. 6.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the spirit or scope of the present disclosure.

The terminology used herein is for the purpose of describing particular example embodiments of the present disclosure and is not intended to be limiting of the described example embodiments of the present disclosure. As used herein, the singular forms "a" and "an" are intended to include the plural forms as well, unless the context clearly indicates otherwise. In addition, unless explicitly described to the contrary, the words "have," "include," and "comprise", and variations such as "has," "having," "includes," "including," "comprises," or "comprising", will be understood to imply the inclusion of stated elements but not the exclusion of any other elements.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

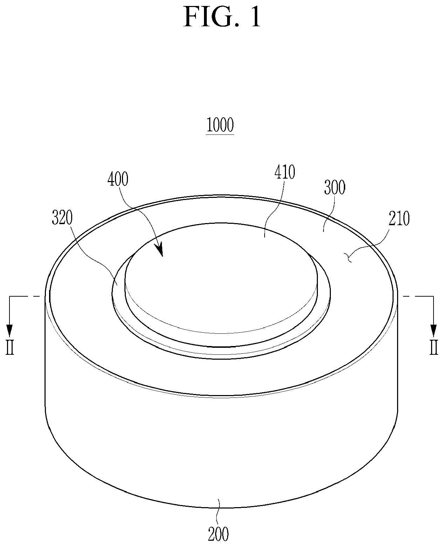

Hereinafter, referring to FIG. 1 to FIG. 3, a rechargeable battery according to an embodiment will be described.

A rechargeable battery according to an embodiment is an ultra-small rechargeable battery and may be a coin-type battery (e.g., a coin cell) or a button-type battery (e.g., a button cell) but is not limited thereto. In some embodiments, the rechargeable battery may be a cylindrical or pin-type battery.

Here, the coin-type battery or the button-type battery is a thin coin or button-type battery and may imply a battery of which a ratio (e.g., a height / diameter ratio) of a height to a diameter is 1 or less, but this is not restrictive. Because the coin-type battery or the button-type battery is generally (or primarily) cylindrical, the cross-section in the horizontal direction is circular, but the present disclosure is not limited thereto. In some embodiments, the rechargeable battery may have an elliptical or polygonal shape in the horizontal direction. The diameter may be a maximum distance with reference to the horizontal direction of the battery, and the height may be a maximum distance (e.g., a distance from a flat top surface to a flat bottom surface in a cross-section) with the vertical direction of the battery as a reference.

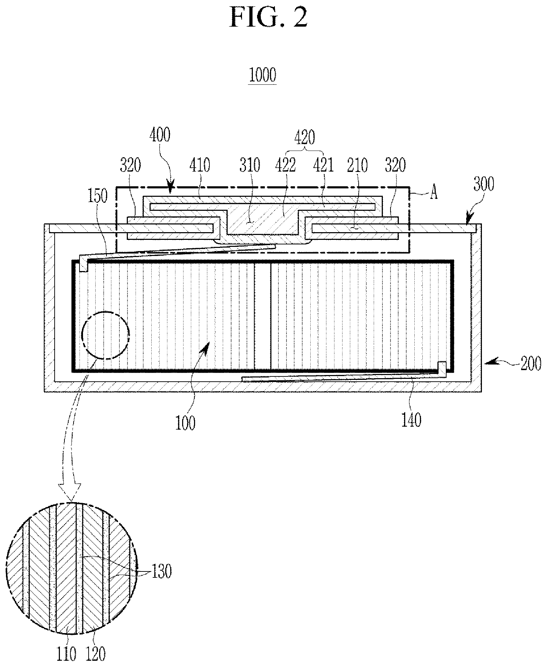

FIG. 1 is a perspective view of a rechargeable battery according to an embodiment, and FIG. 2 is a cross-sectional view taken along the line II-II in FIG. 1.

Referring to FIG. 1 and FIG. 2, a rechargeable battery 1000 according to an embodiment includes an electrode assembly 100, a case 200, a cap plate 300, and a terminal portion 400.

The electrode assembly 100 is accommodated in the case 200. A lower portion of the electrode assembly 100 faces a bottom portion of the case 200, and an upper portion of the electrode assembly 100 faces the cap plate 300 and the terminal portion 400 covering, preferably fully covering an opening 210 of the case 200. The upper and lower portions of the electrode assembly 100 may have a planar shape parallel to each other, but the present disclosure is not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and a separator 130 including an insulating material is positioned between the first electrode 110 and the second electrode 120. The first electrode 110 may be an anode, and the second electrode 120 may be a cathode, but they are not limited thereto. In some embodiments, the first electrode 110 may be a cathode, and the second electrode 120 may be an anode.

The first electrode 110 has a band shape extending in one direction and includes an anode coated region, where an anode active material layer is applied to a current collector of a metal foil (e.g., a Cu foil), and an anode uncoated region, where no active material is applied. The anode uncoated region may be positioned at one end in the extension direction of the first electrode 110.

The second electrode 120 has a band shape extending in one direction while being spaced apart from the first electrode 110 with the separator 130 therebetween and includes a cathode coated region, where a cathode active material layer is applied to a current collector of a metal foil (e.g., an Al foil) and a cathode uncoated region, where no active material is applied.

The cathode uncoated region may be located at one end in the extending direction of the second electrode 120.

The separator 130 extends in one direction between the first electrode 110 and the second electrode 120 to prevent a short circuit between the first electrode 110 and the second electrode 120.

The first electrode 110, the separator 130, and the second electrode 120 are sequentially stacked and wound in the form of a jelly roll. The present disclosure is not limited thereto, and the first electrode 110, the separator 130, and the second electrode 120 may be formed in various known shapes. Each of the first electrode 110, the second electrode 120, and the separator 130 may include various known materials.

The first electrode tab 140 extends from the first electrode 110 of the electrode assembly 100 to the case 200. The first electrode tab 140 is coupled to the bottom portion of the case 200 to connect the first electrode 110 and the case 200 to each other. The first electrode tab 140 contacts the first electrode 110 and the case 200. The first electrode tab 140 is welded to the bottom portion of the case 200, but the present disclosure is not limited thereto. The case 200 has the same polarity as the first electrode 110 via the first electrode tab 140.

The second electrode tab 150 extends from the second electrode 120 of the electrode assembly 100 to the terminal portion 400. The second electrode tab 150 is coupled to a plating layer 410 of the terminal portion 400 to connect the second electrode 120 and the terminal portion 400 to each other. The second electrode tab 150 contacts the second electrode 120 and the terminal portion 400. The second electrode tab 150 is coupled, preferably welded to the surface of the plating layer 410 of the terminal portion 400, but the present disclosure is not limited thereto. The terminal portion 400 has the same polarity as that of the second electrode 120 via the second electrode tab 150.

A center pin penetrating (e.g., extending through) the center of the electrode assembly 100 in the vertical direction may be positioned in a central portion of the electrode assembly 100. The center pin may support the first electrode tab 140 and the second electrode tab 150, but the present disclosure is not limited thereto.

The case 200 is connected to the first electrode 110 of the electrode assembly 100 and accommodates the electrode assembly 100. The case 200 has an opening 210 exposing the top of the electrode assembly 100. Because the first electrode tab 140 is connected, preferably welded to the bottom portion of the case 200 and connected to the first electrode 110 of the electrode assembly 100, the case 200 has the same polarity as the first electrode 110. The case 200 may be a cylinder-shaped can for accommodating the electrode assembly 100 in a jelly roll form, but the case 200 is not limited thereto and may have various known forms and/or shapes. The case 200 may accommodate a variety of known electrolyte solutions together with the electrode assembly 100. An outer surface of the case 200 may be a first electrode terminal of the rechargeable battery 1000, but the present disclosure is not limited thereto. In such an embodiment, a top surface of the plating layer 410, which is the outer surface of the terminal portion 400, may be a second electrode terminal of the rechargeable battery 1000, but the present disclosure is not limited thereto. The case 200 includes stainless steel, but it is not limited thereto and may include another metal, such as aluminum or nickel and copper. In some embodiments, another plating layer may be coated on the outer surface of the case 200, but the present disclosure is not limited thereto and various known coating layers may be coated on the outer surface of the case 200.

The opening 210 in the case 200 is covered by the cap plate 300 and the terminal portion 400.

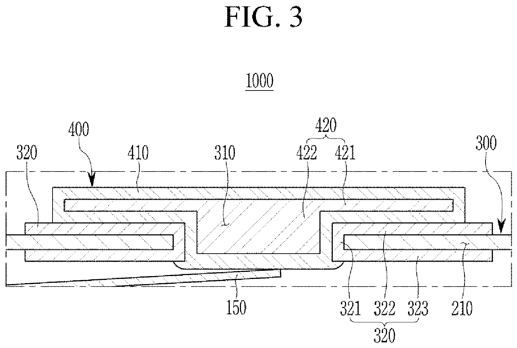

FIG. 3 is an enlarged view of the portion A of FIG. 2.

Referring to FIG. 3 together with FIG. 2, the cap plate 300 is coupled to the case 200 to cover an outer region of the opening 210. The cap plate 300 has an opening (e.g., a penetration hole) 310 exposing a central region of the opening 210 and includes an insulation layer 320 coated on the surface of the cap plate 300 corresponding to (e.g., forming or exposed to) the opening 310. Preferably, the surface of the cap plate 300 in the region of the opening 310 is coated with the insulation layer 320.

The cap plate 300 is directly coupled to a side wall of the case 200 forming the opening 210 in the case 200 by a welding process and the like to cover the outer region of the opening 210. The cap plate 300 has a ring shape formed by the opening 310 in the center of the cap plate 300, but the cap plate 300 is not limited thereto. The cap plate 300 is coupled with the case 200 and has the same polarity as the first electrode 110. The cap plate 300 includes stainless steel, but it is not limited thereto and may include other metals, such as aluminum or nickel and copper. The outer surface of the cap plate 300 may be a first electrode terminal of the rechargeable battery 1000, but it is not limited thereto.

The insulation layer 320 is coated on a portion of the surface of the cap plate 300 corresponding to the opening 310 and insulates between the cap plate 300 and the terminal portion 400. The insulation layer 320 includes a first coating layer 321, a second coating layer 322, and a third coating layer 323. The first coating layer 321 is coated, preferably directly coated on a side surface of the cap plate 300 forming the opening 310, the second coating layer 322 is coated, preferably directly coated on an upper surface of the cap plate 300 around the opening 310, and the third coating layer 323 is coated, preferably directly coated on a lower surface of the cap plate 300 around the opening 310. The first coating layer 321, the second coating layer 322, and the third coating layer 323 are integrally formed, and the first coating layer 321, the second coating layer 322, and the third coating layer 323 directly contact the plating layer 410 of the terminal portion 400. In a vertical cross-section cut through the battery such as shown in Fig. 3, the first coating layer 321, the second coating layer 322, and the third coating layer 323 may together form a c-shaped insulating layer 320. The first coating layer 321 is completely covered by the plating layer 410 of the terminal portion 400 while a part of the second coating layer 322 and a part of the third coating layer 323 may not overlap (e.g., are not covered by) the plating layer 410. In other embodiments, at least 50%, preferably at least 80% of the area of the second or the third coating layer 322, 323 may overlap with (e.g. may be covered by) the plating layer 410. The second coating layer 322 is coated on only a portion of the top surface of the cap plate 300, and the third coating layer 323 is coated on only a portion of the lower surface of the cap plate 300, but the present disclosure is not limited thereto. In other embodiments, each of the second coating layer 322 and the third coating layer 323 may be coated on the entire upper surface and the lower surface of the cap plate 300, respectively.

The insulation layer 320 may be formed by depositing an insulative ceramic material resistant to a high temperature environment between the cap plate 300 and the terminal portion 400, but the present disclosure is not limited thereto.

For example, the insulating layer 320 may include an aluminum oxide, a silicon oxide, a silicon nitride, an iron oxide, glass, or the like, but it is not limited thereto. In some embodiments, the insulation layer 320 may include a variety of known materials that are resistant to high temperature environments, except for polymer materials.

The terminal portion 400 is connected to the second electrode 120 and joined in an insulated manner to the cap plate 300. The terminal portion 400 covers the opening 310 in the cap plate 300 in its enterity. The terminal portion 400 is positioned on the cap plate 300, preferably is positioned to be supported by the cap plate 300. The terminal portion 400 fully covers the central region of the opening 210 in the case 200 at where the opening 310 in the cap plate 300 is exposed. Because the terminal portion 400 completely covers the central region of the opening 210 and the cap plate 300 covers the outer region of the opening 210 in its entirety, the opening 210 in the case 200 is completely covered by the terminal portion 400 and the cap plate 300. The terminal portion 400 tightly seals the electrode assembly 100 together with the case 200 and the cap plate 300. The terminal portion 400 is coupled to the second electrode tab 150 of the electrode assembly 100 to be connected to the second electrode 120 of the electrode assembly 100. Thus, the terminal portion 400 has the same polarity as the second electrode 120.

The terminal portion 400 includes the plating layer 410 and a first terminal plate 420.

The plating layer 410 is coated on a surface of the first terminal plate 420 and directly bonded to the insulation layer 320 of the cap plate 300. The plating layer 410 closes and seals between the first terminal plate 420 and the insulation layer 320 of the cap plate 300 to close and seal between the cap plate 300 and the terminal portion 400. The plating layer 410 may be coated on the surface of the first terminal plate 420 by using various known electroplating or electroless plating processes and may be directly bonded to the insulation layer 320 of the cap plate 300. But the present disclosure is not limited thereto. The plating layer 410 directly contacts the first coating layer 321, the second coating layer 322, and the third coating layer 323 of the insulating layer 320. The plating layer 410 completely covers the first coating layer 321 and overlaps a part of (e.g., partially covers) the second coating layer 322 and a part of the third coating layer 323. The plating layer 410 may include various known conductive materials, such as metal, but it is not limited thereto.

The first terminal plate 420 includes a flange portion 421 and a protruding portion 422.

The flange portion 421 is positioned on the cap plate 300 and overlaps the cap plate 300 to completely cover the opening 310. The flange portion 421 has a wider area than the protruding portion 422. The flange portion 421 may have a larger diameter than the protruding portion 422. The flange portion 421 has a smaller thickness than the protruding portion 422, but it is not limited thereto. A lower surface of the flange portion 421 contacts, preferably directly contacts the plating layer 410, and the flange portion 421 is bonded to the insulation layer 320 of the cap plate 300 by the plating layer 410. The plating layer 410 positioned on an upper surface of the flange portion 421 may be a second electrode terminal of the rechargeable battery 1000.

The protruding portion 422 protrudes from the flange portion 421 and penetrates (e.g., extends into or through) the opening 310. The protruding portion 422 passes through the opening 310 from the flange portion 421 and is connected to the second electrode 120 through the plating layer 410 coated on the protruding portion 422. The plating layer 410 positioned on a lower surface of the protruding portion 422 is coupled to or combined with the second electrode tab 150. The plating layer 410 positioned on the lower surface of the protruding portion 422 may be welded to the second electrode tab 150, but the present disclosure is not limited thereto. Because the protruding portion 422 is coupled to the second electrode tab 150 through the plating layer 410, the first terminal plate 420 and the plating layer 410 including the protruding portion 422 and the flange portion 421 of the terminal portion 400 have the same polarity as the second electrode 120.

The lower surface of the protruding portion 422 connected to the second electrode tab 150 may have a smaller diameter than an upper surface of the flange portion 421. In a cross-sectional cut through the battery 1000 such as shown Fig. 3, the terminal portion 400 may have a T-shape. The protruding portion 420 of the terminal portion 400 may have a T-shape and the plating layer 410 formed around the protruding portion 420 may have a T-shape.

The protruding portion 422 and the flange portion 421 are integrally formed, but the present disclosure is not limited thereto and different materials may be combined to form the first terminal plate 420. The first terminal plate 420 includes stainless steel, but it is not limited thereto and may include other metals, such as aluminum or nickel and copper.

As described above, in the rechargeable battery 1000 according to an embodiment of the present disclosure, the cap plate 300 is directly coupled to the case 200, and the insulating bonding between the cap plate 300 and the terminal portion 400 is carried out by the plating layer 410 of the terminal portion 400, that is directly bonded to the insulation layer 320 (preferably including a ceramic material) coated on the surface of the cap plate 300 corresponding to the opening 310 of the cap plate 300, and thus, sealing by the terminal portion 400, the cap plate 300, and the case 200 is easily performed even in a high temperature and high humidity environment.

For example, a rechargeable battery 1000 that is strong (e.g., durable or resilient) in a high temperature and high humidity environment is provided.

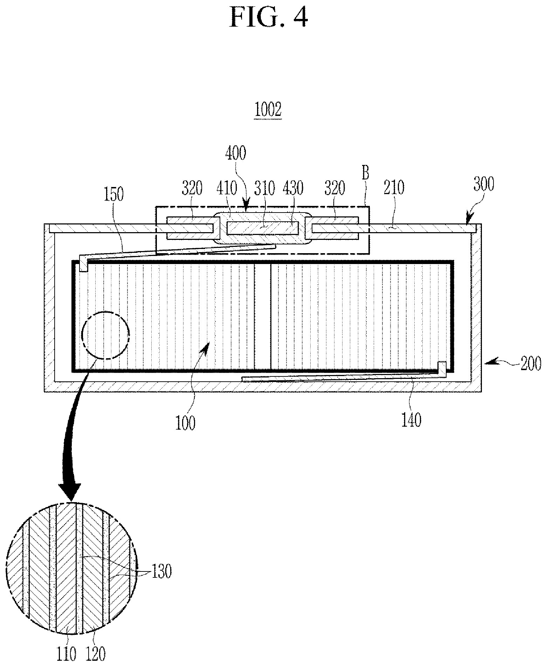

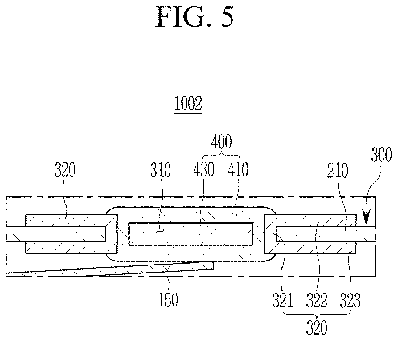

Hereinafter, referring to FIG. 4 and FIG. 5, a rechargeable battery according to another embodiment will be described. Hereinafter, parts that are different from the rechargeable battery according to the above-described embodiment will be described.

FIG. 4 is a cross-sectional view of a rechargeable battery according to another embodiment, and FIG. 5 is an enlarged view of the part B of FIG. 4.

Referring to FIG. 4 and FIG. 5, a rechargeable battery 1002 according to another embodiment includes an electrode assembly 100, a case 200, a cap plate 300, and a terminal portion 400.

The terminal portion 400 is connected to the second electrode 120 and bonded in an insulated manner to the cap plate 300. The terminal portion 400 completely covers an opening (e.g., a penetration hole) 310 in the cap plate 300. The terminal portion 400 is positioned inside the opening 310 in the cap plate 300. The terminal portion 400 completely covers a central region of an opening 210 in the case 200 at where the opening 310 in the cap plate 300 is exposed. Because the terminal portion 400 completely covers the central region of the opening 210 and the cap plate 300 covers an outer region of the opening 210 in its entirety, the opening 210 in the case 200 is completely covered by the terminal portion 400 and the cap plate 300. The terminal portion 400 tightly seals the electrode assembly 100 together with the case 200 and the cap plate 300. The terminal portion 400 is coupled to the second electrode tab 150 of the electrode assembly 100 to be connected to the second electrode 120 of the electrode assembly 100. Thus, the terminal portion 400 has the same polarity as the second electrode 120.

The terminal portion 400 includes a plating layer 410 and a second terminal plate 430.

The plating layer 410 is coated, preferably fully coated on a surface of the second terminal plate 430 and directly bonded to an insulation layer 320 of the cap plate 300. The plating layer 410 closes and seals between the second terminal plate 430 and the insulation layer 320 of the cap plate 300 to close and seal between the cap plate 300 and the terminal portion 400. The plating layer 410 may be coated on a surface of the second terminal plate 430 by using various known electroplating or electroless plating processes and may be directly bonded to the insulation layer 320 of the cap plate 300. But the present disclosure is not limited thereto. The plating layer 410 directly contacts the first coating layer 321, the second coating layer 322, and the third coating layer 323 of the insulation layer 320. The plating layer 410 completely covers the first coating layer 321, and overlaps a part of (e.g., partially covers) the second coating layer 322 and a part of the third coating layer 323. The plating layer 410 may include various known conductive materials, such as a metal, but it is not limited thereto.

The second terminal plate 430 is positioned inside the opening 310 in the cap plate 300 to cover at least a part of the opening 310 in the cap plate 300. The second terminal plate 430 has a smaller diameter than a diameter of the opening 310. The second terminal plate 430 is bonded to the insulation layer 320 of the cap plate 300 by the plating layer 410. The plating layer 410 positioned on a lower surface of the second terminal plate 430 is coupled with the second electrode tab 150, and the plating layer 410 positioned on an upper surface of the second terminal plate 430 may be a second electrode terminal of the rechargeable battery 1002. The plating layer 410 positioned on a lower surface of the second terminal plate 430 may be welded to the second electrode tab 150, but it is not limited thereto. Because the second terminal plate 430 is coupled with the second electrode tab 150 through the plating layer 410, the second terminal plate 430 and the plating layer 410 of the terminal portion 400 have the same polarity as the second electrode 120. The second terminal plate 430 includes stainless steel, but this is not restrictive, and the second terminal plate 430 may include other metals, such as aluminum or nickel and copper. The terminal portion 400 may have a disc shape with a circumferential indentation connectable to the insulation layer 320 at the periphery of the opening 310.

As described above, in the rechargeable battery 1002 according to an embodiment of the present disclosure, the cap plate 300 is directly coupled to the case 200, and the insulating bonding between the cap plate 300 and the terminal portion 400 is carried out by the plating layer 410 of the terminal portion 400 that is directly bonded to the insulation layer 320 (preferably including a ceramic material) coated on the surface of the cap plate 300 corresponding to the opening 310 in the cap plate 300, and thus, sealing by the terminal portion 400, the cap plate 300, and the case 200 is easily performed even in a high temperature and high humidity environment.

For example, a rechargeable battery 1002 that is strong (e.g., durable or resilient) in a high temperature and high humidity environment is provided.

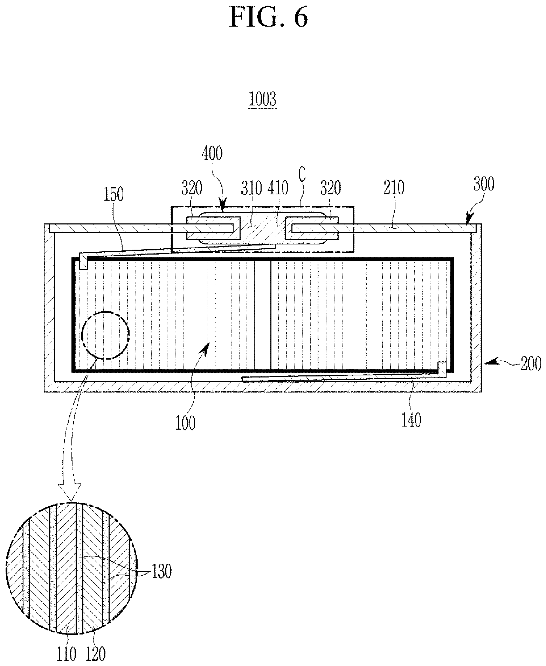

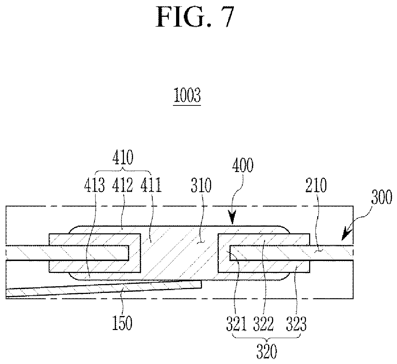

Hereinafter, referring to FIG. 6 and FIG. 7, a rechargeable battery according to another embodiment will be described.

Hereinafter, parts that are different from the rechargeable battery according to the above-described embodiments will be described.

FIG. 6 is a cross-sectional view of a rechargeable battery according to another embodiment, and FIG. 7 is an enlarged view of the part C of FIG. 6.

FIG. 6 and referring to FIG. 7, a rechargeable battery 1003 according to another embodiment includes an electrode assembly 100, a case 200, a cap plate 300, and a terminal portion 400.

The terminal portion 400 is connected to the second electrode 120 and is bonded in an insulated manner to the cap plate 300. The terminal portion 400 completely covers an opening (e.g., a penetration hole) 310 in the cap plate 300. The terminal portion 400 fills the opening 310 in the cap plate 300. The terminal portion 400 completely covers a central region of an opening 210 in the case 200 to which the opening 310 in the cap plate 300 is exposed. Because the terminal portion 400 completely covers the central region of the opening 210 and the cap plate 300 covers an outer region of the opening 210 in its entirety, the opening 210 in the case 200 is completely covered by the terminal portion 400 and the cap plate 300.

The terminal portion 400 tightly seals the electrode assembly 100 together with the case 200 and the cap plate 300. The terminal portion 400 is coupled to the second electrode tab 150 of the electrode assembly 100 to be connected to the second electrode 120 of the electrode assembly 100. The terminal portion 400 has the same polarity as the second electrode 120.

The terminal portion 400 includes a plating layer 410.

The plating layer 410 completely fills the opening 310 in the cap plate 300 and is directly bonded to an insulation layer 320 of the cap plate 300. The plating layer 410 closes and seals the opening 310 between the insulation layer 320 of the cap plate 300 to close and seal the cap plate 300 and the terminal portion 400. The opening 310 in the cap plate 300 filled with the plating layer 410 may have a smaller diameter than the opening 310 in the rechargeable battery 1000 according to an above-mentioned embodiment or the opening 310 in the rechargeable battery 1002 according to the other embodiment, but it is not limited thereto. The plating layer 410 may be directly bonded to the insulation layer 320 of the cap plate 300 by completely filling the opening 310 in the cap plate 300 by using various known electroplating or electroless plating processes, but it is not limited thereto. The plating layer 410 directly contacts the first coating layer 321, the second coating layer 322, and the third coating layer 323 of the insulation layer 320. The plating layer 410 completely covers the first coating layer 321, and overlaps a part of (e.g., partially covers) the second coating layer 322 and a part of the third coating layer 323. The plating layer 410 includes a first plating portion 411, a second plating portion 412, and a third plating portion 413.

The first plating portion 411 fills the opening 310 and directly contacts the first coating layer 321, the second plating portion 412 directly contacts the second coating layer 322 by covering an upper surface of the cap plate 300 from the first plating portion 411, and the third plating portion 413 directly contacts the third coating layer 323 by covering a lower surface of the cap plate 300 from the first plating portion 411. The first plating portion 411, the second plating portion 412, and the third plating portion 413 are integrally formed, but plating layer 410 is not limited thereto. At least one of the first plating portion 411, the second plating portion 412, and the third plating portion 413 may contain a different conductive material than the other portion(s). For example, at least one of the first plating portion 411, the second plating portion 412, and the third plating portion 413 may be formed as a plating seed layer and the other portion(s) may be formed as a plating growth layer, but the present disclosure is not limited thereto.

The terminal portion 400 is positioned inside the opening 310 in the cap plate 300 by the plating layer 410. The third plating portion 413 of the plating layer 410 is coupled with the second electrode tab 150, and the second plating portion 412 may be a second electrode terminal of the rechargeable battery 1003. The third plating portion 413 of the plating layer 410 may be welded to the second electrode tab 150, but it is not limited thereto. Because the plating layer 410 is coupled with the second electrode tab 150, the terminal portion 400 has the same polarity as that of the second electrode 120. The plating layer 410 may include various known conductive materials, such as a metal, but it is not limited thereto.

As described above, in the rechargeable battery 1003 according to an embodiment of the present disclosure, the cap plate 300 is directly coupled to the case 200, and the insulating bonding between the cap plate 300 and the terminal portion 400 is carried out by the plating layer 410 of the terminal portion 400 that is directly bonded to the insulation layer 320 (preferably including a ceramic material) coated on the surface of the cap plate 300 corresponding to the opening 310 in the cap plate 300, and thus, sealing by the terminal portion 400, the cap plate 300, and the case 200 is easily performed even in a high temperature and high humidity environment.

For example, a rechargeable battery 1003 that is strong (e.g., durable or resilient) in a high temperature and high humidity environment is provided.

While the present disclosure has been described in connection with what is presently considered to be practical embodiments, it is to be understood that the present disclosure is not limited to the disclosed embodiments. The present disclosure is intended to cover various modifications included within the scope of the appended claims.

### Description of Some Reference Numerals

electrode assembly 100
case 200
cap plate 300
insulation layer 320
terminal portion 400
plating layer 410

## Claims

1. A rechargeable battery (1000, 1002, 1003) comprising:
an electrode assembly (100) comprising a first electrode (110), a second electrode (120), and a separator (130) between the first electrode (110) and the second electrode (120);
a case (200) accommodating the electrode assembly (100) and connected to the first electrode (110), the case (200) having an opening (210) exposing the electrode assembly (100);
a cap plate (300) coupled with the case (200) and covering an outer region of the opening (210) in the case (200), the cap plate (300) having an opening (310) exposing a central region of the opening (210) in the case (200) and comprising an insulation layer (320) coated on a surface thereof corresponding to the opening (310) in the cap plate (300); and
a terminal portion (400) connected with the second electrode (120) and bonded in an insulated manner to the cap plate (300), the terminal portion (400) covering the opening (310) in the cap plate (300),
wherein the terminal portion (400) comprises a plating layer (410) being directly bonded to the insulation layer (320) of the cap plate (300), and
wherein the plating layer (410) completely fills the opening (310) in the cap plate (300).

2. The rechargeable battery (1000) of claim 1, wherein the terminal portion (400) further comprises a first terminal plate (420) comprising a flange portion (421) completely covering the opening (310) in the cap plate (300) and being provided on the cap plate (300), and a protruding portion (422) that extends from the flange portion (421) into the opening (310) in the cap plate (300), and the plating layer (410) is coated on a surface of the first terminal plate (420).

3. The rechargeable battery (1000) of claim 2, wherein the plating layer (410) closes and seals between the first terminal plate (420) and the cap plate (300).

4. The rechargeable battery (1002) of claim 1, wherein the terminal portion (400) further comprises a second terminal plate (430) in the opening (310) in the cap plate (300), and the plating layer (410) is coated on a surface of the second terminal portion (400).

5. The rechargeable battery (1002) of claim 4, wherein the plating layer (410) closes and seals between the second terminal plate (430) and the cap plate (300).

6. The rechargeable battery (1000, 1002, 1003) of claim 1, wherein the plating layer (410) comprises:
a first plating portion (411) filling the opening (310) in the cap plate (300);
a second plating portion (412) extend from the first plating portion (411) and covering an upper surface of the cap plate (300); and
a third plating portion (413) extending from the first plating portion (411) and covering a lower surface of the cap plate (300).

7. The rechargeable battery (1000, 1002, 1003) of any one of the previous claims, wherein the insulation layer (320) comprises:
a first coating layer (321) coated on a side surface of the cap plate (300) that forms the opening (310) in the cap plate (300);
a second coating layer (322) coated on an upper surface of the cap plate (300) around the opening (310) in the cap plate (300); and
a third coating layer (323) coated on a lower surface of the cap plate (300) around the opening (310) in the cap plate (300).

8. The rechargeable battery (1000, 1002, 1003) of claim 7, wherein the first coating layer (321), the second coating layer (322), and the third coating layer (323) are integrally formed.

9. The rechargeable battery (1000, 1002, 1003) of claim 7 or 8, wherein:
the second coating layer (322) is coated on only a part of the upper surface of the cap plate (300), and
the third coating layer (323) is coated on only a part of the lower surface of the cap plate (300).

10. The rechargeable battery (1000, 1002, 1003) of any one of claims 7 to 9, wherein the plating layer (410) directly contacts the first coating layer (321), the second coating layer (322), and the third coating layer (323).

11. The rechargeable battery (1000, 1002, 1003) of any one of claims 7 to 10, wherein:
the first coating layer (321) is completely covered by the plating layer (410), and
a part of the second coating layer (322) and a part of the third coating layer (323) do not overlap the plating layer (410).

12. The rechargeable battery (1000, 1002, 1003) of any one of the previous claims, wherein the insulation layer (320) comprises a ceramic material.

13. The rechargeable battery (1000, 1002, 1003) of claim 1, wherein the rechargeable battery (1000, 1002, 1003) is a coin cell or a button cell.

14. The rechargeable battery (1000, 1002, 1003) of claim 13, wherein a ratio of a height to a diameter of the coin cell or the button cell is 1 or less.

## Patentansprüche

1. Wiederaufladbare Batterie (1000, 1002 1003), umfassend:
eine Elektrodenanordnung (100), die eine erste Elektrode (110), eine zweite Elektrode (120) und einen Separator (130) zwischen der ersten Elektrode (110) und der zweiten Elektrode (120) umfasst;
ein Gehäuse (200), das die Elektrodenanordnung (100) aufnimmt und mit der ersten Elektrode (110) verbunden ist, wobei das Gehäuse (200) eine Öffnung (210) aufweist, welche die Elektrodenanordnung (100) freilegt;
eine Abdeckplatte (300), die an das Gehäuse (200) gekoppelt ist und einen äußeren Bereich der Öffnung (210) in dem Gehäuse (200) abdeckt, wobei die Abdeckplatte (300) eine Öffnung (310) aufweist, die einen mittleren Bereich der Öffnung (210) in dem Gehäuse (200) freilegt, und eine auf deren Oberfläche beschichtete Isolierschicht (320), die der Öffnung (310) in der Abdeckplatte (300) entspricht, umfasst; und
einen Anschlussabschnitt (400), der mit der zweiten Elektrode (120) verbunden und isolierend an die Abdeckplatte (300) gebunden ist, wobei der Anschlussabschnitt (400) die Öffnung (310) in der Abdeckplatte (300) abdeckt,
wobei der Anschlussabschnitt (400) eine Überzugsschicht (410) umfasst, die unmittelbar an die Isolierschicht (320) der Abdeckplatte (300) gebunden ist, und
wobei die Überzugsschicht (410) die Öffnung (310) in der Abdeckplatte (300) vollständig füllt.

2. Wiederaufladbare Batterie (1000) nach Anspruch 1, wobei der Anschlussabschnitt (400) ferner umfasst: eine erste Anschlussplatte (420), die einen Flanschabschnitt (421) umfasst, der die Öffnung (310) in der Abdeckplatte (300) vollständig abdeckt und auf der Abdeckplatte (300) vorgesehen ist, und einen vorstehenden Abschnitt (422), der sich von dem Flanschabschnitt (421) in die Öffnung (310) in der Abdeckplatte (300) erstreckt, wobei die Überzugsschicht (410) auf einer Oberfläche der ersten Anschlussplatte (420) beschichtet ist.

3. Wiederaufladbare Batterie (1000) nach Anspruch 2, wobei die Überzugsschicht (410) zwischen der ersten Anschlussplatte (420) und der Abdeckplatte (300) verschließt und abdichtet.

4. Wiederaufladbare Batterie (1002) nach Anspruch 1, wobei der Anschlussabschnitt (400) ferner eine zweite Anschlussplatte (430) in der Öffnung (310) in der Abdeckplatte (300) umfasst und die Überzugsschicht (410) auf einer Oberfläche des zweiten Endabschnitts (400) beschichtet ist.

5. Wiederaufladbare Batterie (1002) nach Anspruch 4, wobei die Überzugsschicht (410) zwischen der zweiten Anschlussplatte (430) und der Abdeckplatte (300) verschließt und abdichtet.

6. Wiederaufladbare Batterie (1000, 1002, 1003) nach Anspruch 1, wobei die Überzugsschicht (410) Folgendes umfasst:
einen ersten Überzugsabschnitt (411), der die Öffnung (310) in der Abdeckplatte (300) füllt;
einen zweiten Überzugsabschnitt (412), der sich von dem ersten Überzugsabschnitt (411) erstreckt und eine obere Oberfläche der Abdeckplatte (300) abdeckt; und
einen dritten Überzugsabschnitt (413), der sich von dem ersten Überzugsabschnitt (411) erstreckt und eine untere Oberfläche der Abdeckplatte (300) abdeckt.

7. Wiederaufladbare Batterie (1000, 1002, 1003) nach einem der vorangehenden Ansprüche, wobei die Isolierschicht (320) Folgendes umfasst:
eine erste Beschichtungsschicht (321), die auf einer seitlichen Oberfläche der Abdeckplatte (300), welche die Öffnung (310) in der Abdeckplatte (300) ausbildet, beschichtet ist;
eine zweite Beschichtungsschicht (322), die auf einer oberen Oberfläche der Abdeckplatte (300) um die Öffnung (310) in der Abdeckplatte (300) herum beschichtet ist; und
eine dritte Beschichtungsschicht (323), die auf einer unteren Oberfläche der Abdeckplatte (300) um die Öffnung (310) in der Abdeckplatte (300) herum beschichtet ist.

8. Wiederaufladbare Batterie (1000, 1002, 1003) nach Anspruch 7, wobei die erste Beschichtungsschicht (321), die zweite Beschichtungsschicht (322) und die dritte Beschichtungsschicht (323) einstückig ausgebildet sind.

9. Wiederaufladbare Batterie (1000, 1002, 1003) nach Anspruch 7 oder 8, wobei:
die zweite Beschichtungsschicht (322) auf nur einem Teil der oberen Oberfläche der Abdeckplatte (300) beschichtet ist, und
die dritte Beschichtungsschicht (323) auf nur einem Teil der unteren Oberfläche der Abdeckplatte (300) beschichtet ist.

10. Wiederaufladbare Batterie (1000, 1002, 1003) nach einem der Ansprüche 7 bis 9, wobei die Überzugsschicht (410) unmittelbar die erste Beschichtungsschicht (321), die zweite Beschichtungsschicht (322) und die dritte Beschichtungsschicht (323) berührt.

11. Wiederaufladbare Batterie (1000, 1002, 1003) nach einem der Ansprüche 7 bis 10, wobei:
die erste Beschichtungsschicht (321) vollständig von der Überzugsschicht (410) abgedeckt ist und
ein Teil der zweiten Beschichtungsschicht (322) und ein Teil der dritten Beschichtungsschicht (323) die Überzugsschicht (410) nicht überlappen.

12. Wiederaufladbare Batterie (1000, 1002, 1003) nach einem der vorangehenden Ansprüche, wobei die Isolierschicht (320) ein Keramikmaterial umfasst.

13. Wiederaufladbare Batterie (1000, 1002, 1003) nach Anspruch 1, wobei die wiederaufladbare Batterie (1000, 1002, 1003) eine Münzzelle oder eine Knopfzelle ist.

14. Wiederaufladbare Batterie (1000, 1002, 1003) nach Anspruch 13, wobei ein Verhältnis einer Höhe zu einem Durchmesser der Münzzelle oder Knopfzelle 1 oder weniger beträgt.

## Revendications

1. Batterie rechargeable (1000, 1002, 1003) comprenant :
un ensemble d'électrodes (100) comprenant une première électrode (110), une deuxième électrode (120), et un séparateur (130) entre la première électrode (110) et la deuxième électrode (120) ;
un boîtier (200) accueillant l'ensemble d'électrodes (100) et connecté à la première électrode (110), le boîtier (200) ayant une ouverture (210) exposant l'ensemble d'électrodes (100) ;
une plaque formant capuchon (300) couplée au boîtier (200) et recouvrant une région externe de l'ouverture (210) dans le boîtier (200), la plaque formant capuchon (300) ayant une ouverture (310) exposant une région centrale de l'ouverture (210) dans le boîtier (200) et comprenant une couche isolante (320) revêtue sur une surface de celle-ci correspondant à l'ouverture (310) dans la plaque formant capuchon (300) ; et
une partie borne (400) connectée à la deuxième électrode (120) et liée d'une manière isolée à la plaque formant capuchon (300), la partie borne (400) recouvrant l'ouverture (310) dans la plaque formant capuchon (300),
dans laquelle la partie borne (400) comprend une couche de placage (410) qui est directement liée à la couche isolante (320) de la plaque formant capuchon (300), et
dans laquelle la couche de placage (410) remplit complètement l'ouverture (310) dans la plaque formant capuchon (300).

2. Batterie rechargeable (1000) selon la revendication 1, dans laquelle la partie borne (400) comprend en outre une première plaque de borne (420) comprenant une partie bride (421) recouvrant complètement l'ouverture (310) dans la plaque formant capuchon (300) et qui est prévue sur la plaque formant capuchon (300), et une partie saillante (422) qui s'étend à partir de la partie bride (421) jusque dans l'ouverture (310) dans la plaque formant capuchon (300), et la couche de placage (410) est revêtue sur une surface de la première plaque de borne (420).

3. Batterie rechargeable (1000) selon la revendication 2, dans laquelle la couche de placage (410) ferme et rend hermétique entre la première plaque de borne (420) et la plaque formant capuchon (300).

4. Batterie rechargeable (1002) selon la revendication 1, dans laquelle la partie borne (400) comprend en outre une deuxième plaque de borne (430) dans l'ouverture (310) dans la plaque formant capuchon (300), et la couche de placage (410) est revêtue sur une surface de la deuxième partie de borne (400).

5. Batterie rechargeable (1002) selon la revendication 4, dans laquelle la couche de placage (410) ferme et rend hermétique entre la deuxième plaque de borne (430) et la plaque formant capuchon (300).

6. Batterie rechargeable (1000, 1002, 1003) selon la revendication 1, dans laquelle la couche de placage (410) comprend :
une première partie de placage (411) remplissant l'ouverture (310) dans la plaque formant capuchon (300) ;
une deuxième partie de placage (412) s'étendant à partir de la première partie de placage (411) et recouvrant une surface supérieure de la plaque formant capuchon (300) ; et
une troisième partie de placage (413) s'étendant à partir de la première partie de placage (411) et recouvrant une surface inférieure de la plaque formant capuchon (300).

7. Batterie rechargeable (1000, 1002, 1003) selon l'une quelconque des revendications précédentes, dans laquelle la couche isolante (320) comprend :
une première couche de revêtement (321) revêtue sur une surface latérale de la plaque formant capuchon (300) qui forme l'ouverture (310) dans la plaque formant capuchon (300) ;
une deuxième couche de revêtement (322) revêtue sur une surface supérieure de la plaque formant capuchon (300) autour de l'ouverture (310) dans la plaque formant capuchon (300) ; et
une troisième couche de revêtement (323) revêtue sur une surface inférieure de la plaque formant capuchon (300) autour de l'ouverture (310) dans la plaque formant capuchon (300).

8. Batterie rechargeable (1000, 1002, 1003) selon la revendication 7, dans laquelle la première couche de revêtement (321), la deuxième couche de revêtement (322), et la troisième couche de revêtement (323) sont formées d'un seul tenant.

9. Batterie rechargeable (1000, 1002, 1003) selon la revendication 7 ou 8, dans laquelle :
la deuxième couche de revêtement (322) est revêtue sur uniquement une part de la surface supérieure de la plaque formant capuchon (300), et
la troisième couche de revêtement (323) est revêtue sur uniquement une part de la surface inférieure de la plaque formant capuchon (300).

10. Batterie rechargeable (1000, 1002, 1003) selon l'une quelconque des revendications 7 à 9, dans laquelle la couche de placage (410) est directement en contact avec la première couche de revêtement (321), la deuxième couche de revêtement (322), et la troisième couche de revêtement (323).

11. Batterie rechargeable (1000, 1002, 1003) selon l'une quelconque des revendications 7 à 10, dans laquelle :
la première couche de revêtement (321) est complètement recouverte par la couche de placage (410), et
une part de la deuxième couche de revêtement (322) et une part de la troisième couche de revêtement (323) ne chevauchent pas la couche de placage (410).

12. Batterie rechargeable (1000, 1002, 1003) selon l'une quelconque des revendications précédentes, dans laquelle la couche isolante (320) comprend un matériau céramique.

13. Batterie rechargeable (1000, 1002, 1003) selon la revendication 1, dans laquelle la batterie rechargeable (1000, 1002, 1003) est une pile pièce de monnaie ou une pile bouton.

14. Batterie rechargeable (1000, 1002, 1003) selon la revendication 13, dans laquelle un rapport d'une hauteur sur un diamètre de la pile pièce de monnaie ou de la pile bouton est de 1 ou moins.
